# FASCICULE DE BREVET EUROPEEN

(11) **EP 0 637 504 B1**
(45) Date de publication et mention de la délivrance du brevet: **22.07.1998**
(21) Numéro de dépôt: 94110865.6
(22) Date de dépôt: 13.07.1994
(51) Int. Cl.: B29D 30/06, B29C 33/30

(54) **Moule pour pneumatique et procédé de moulage de pneumatique**
Reifenform und Verfahren zum Formen von Reifen
Tyre mould and process for moulding tyres

(30) Priorité: 06.08.1993 FR 9309799
(43) Date de publication de la demande: 08.02.1995
(73) Titulaire: SEDEPRO, F-75015 Paris (FR)
(72) Inventeur: Ladouce, Jean-Pierre, F-63000 Clermont-Ferrand (FR)
(74) Mandataire: Bauvir, Jacques

(56) Documents cités:
- EP-A- 0 569 909
- DE-A- 2 210 099
- DE-C- 343 212
- US-A- 2 297 017
- US-A- 2 679 172
- US-A- 2 754 546
- US-A- 4 058 422
- US-A- 4 691 431
- US-A- 5 186 952
- DATABASE WPI Week 7649, Derwent Publications Ltd., London, GB; AN 76-91423X & JP-A-51 119 776 (BRIDGESTONE TIRE K. K.) 21 October 1976

## Description

La présente invention concerne les moules pour pneumatiques et en particulier les parties latérales de ces moules, communément appelées coquilles, qui sont utilisées pour mouler la partie visible (partie extérieure) des flancs du pneumatique.

Au cours du moulage d'un pneumatique, il est nécessaire de pouvoir évacuer tout l'air qui pourrait se trouver emprisonné entre le pneu introduit dans le moule et les différentes pièces du moule. S'il subsiste la moindre poche d'air emprisonnée entre le moule et le pneumatique, cela va provoquer un défaut de moulage apparaissant sur la surface extérieure du pneumatique. De tels défauts de moulage sont inacceptables, tant du point de vue de la qualité du pneumatique fabriqué, que du point de vue de son aspect esthétique. Or, on sait qu'il est impossible d'assurer une éventation totale d'un moule d'une façon naturelle, c'est-à-dire simplement en utilisant les espaces entre les différentes pièces constitutives du moule pour assurer l'évacuation de l'air. On recourt donc à différents palliatifs dont l'un est très connu et très couramment employé dans l'industrie du pneumatique, à savoir le perçage de petits trous d'évent, partout où cela est nécessaire dans le moule.

Lorsque de tels évents sont utilisés, on en voit la trace sur le pneumatique moulé sous forme de petites excroissances en caoutchouc dépassant de la surface du pneumatique. On sait bien que, dès qu'un interstice dépasse la taille de 0,05 mm, il est bien entendu capable d'assurer l'éventation, mais il autorise en même temps une légère fuite de caoutchouc cru. Or, il est impossible de réaliser de façon économique des perçages dont le diamètre soit inférieur à 0,05 mm. C'est pourquoi on continue de voir sur la plupart des pneumatiques la trace des petits trous d'évents sous forme de petites protubérances dépassant de la surface du pneumatique.

Un objectif de la présente invention est d'éliminer les trous d'éventation sur les coquilles des moules de pneumatiques. En effet l'éventation correcte d'un moule nécessite le perçage de trous d'éventation également sur les coquilles assurant le moulage des flancs. Dès lors, les bavures de moulage apparaissent sur les flancs du pneumatiques, et ces bavures restent visibles même bien longtemps après le début de l'utilisation du pneumatique car les flancs ne subissent normalement aucune usure par frottement, contrairement à la bande de roulement sur laquelle toutes les bavures de moulage ont tôt fait de disparaître dès les premiers kilomètres parcourus par le pneu.

Un autre objectif de l'invention est d'assurer une éventation parfaite des coquilles de moule de pneumatique sans que cela ne laisse la moindre trace sur le pneumatique lorsque celui-ci est moulé et vulcanisé, comme par exemple des petites nervures superficielles moulées dans des rainures correspondantes usinées sur la coquille dans le seul but d'évacuer l'air emprisonné lors du moulage.

Selon l'invention, le moule pour pneumatique, comportant deux coquilles pour le moulage des flancs du pneumatique, et des moyens de moulage de la bande de roulement du pneumatique, est caractérisé en ce que au moins une coquille comprend un assemblage feuilleté, constitué d'éléments lamelliformes ayant des faces latérales et des tranches, lesdites faces latérales étant orientées sensiblement parallèlement à l'axe du moule et étant adjacentes, comportant des moyens pour maintenir lesdites faces latérales pressées les unes contre les autres tout en maintenant entre lesdits éléments lamelliformes un jeu suffisant pour le passage de l'air, la surface moulante pour ledit flanc étant constituée par les tranches juxtaposées desdits éléments lamelliformes.

Par l'expression "axe du moule" , on désigne l'axe correspondant à l'axe de rotation du pneu moulé. L'assemblage feuilleté est constitué d'éléments lamelliformes parallèles à l'axe, ou éventuellement faiblement inclinés par rapport à celui-ci, par exemple d'un angle pouvant aller jusqu'à 30°.

L'invention s'étend aussi au procédé de moulage utilisant un tel moule, dans lequel l'évacuation de l'air est assuré par cheminement de l'air entre les éléments lamelliformes.

Les figures suivantes permettent de bien comprendre l'invention par la description détaillée de divers aspects de la réalisation d'un moule selon l'invention :
La figure 1 montre, en coupe radiale, une coquille et son utilisation pour le moulage d'un pneumatique ;
La figure 2 montre une phase de la réalisation d'une coquille ;
La figure 3 montre une vue de côté d'une coquille ;
La figure 4 montre une coquille de dos, illustrant une variante de fabrication ;
La figure 5 est une coupe selon V/V à la figure 4 illustrant l'obtention du brut ;
La figure 6 est une vue selon le même plan de coupe montrant la coquille après usinage.

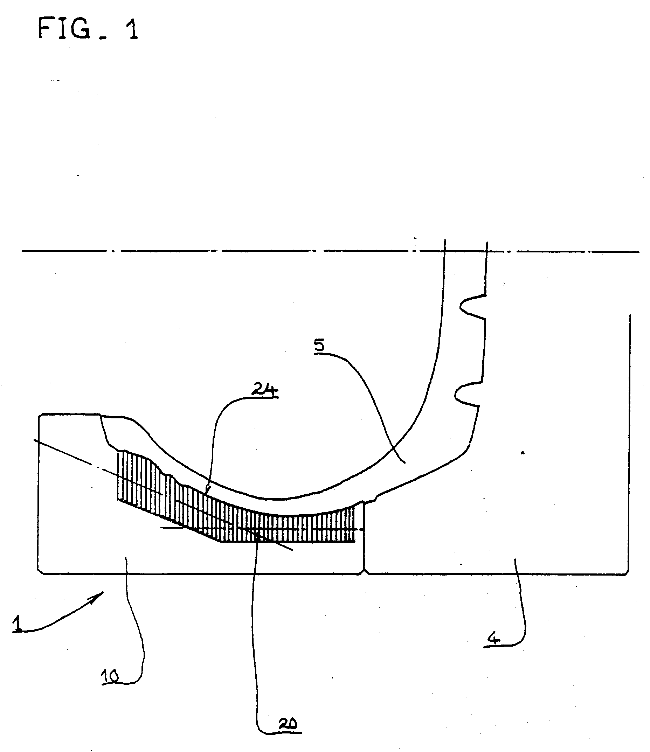

A la figure 1, on reconnaît une coupe radiale montrant un moule du type dit à secteurs, dans lequel on voit une coquille latérale 1 et le secteur 4. La coquille 1 se caractérise par un empilage de tôles, et n'a donc pas, vue en coupe radiale, l'aspect massif usuel. Lesdites tôles constituent l'élément lamelliforme utilisé. De préférence, l'épaisseur desdits éléments lamelliformes est comprise entre 0.1 et 5 mm.

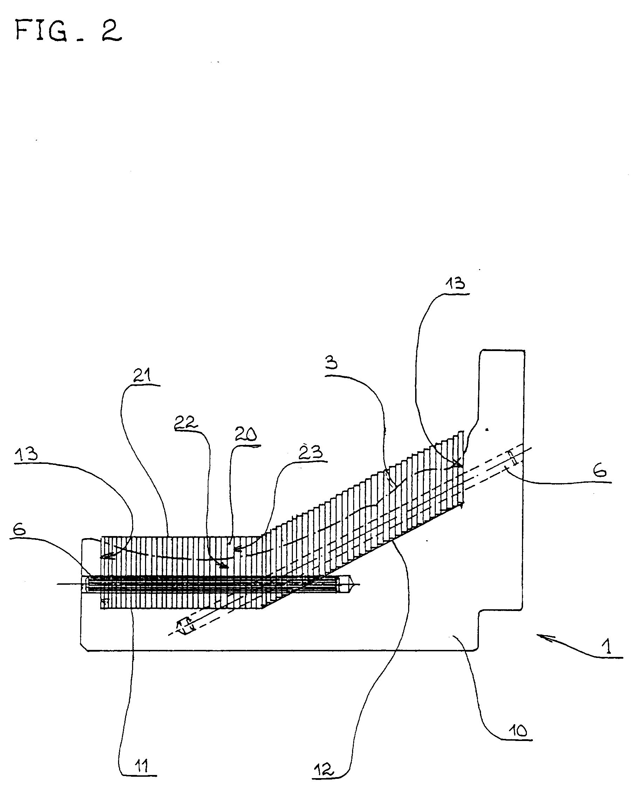

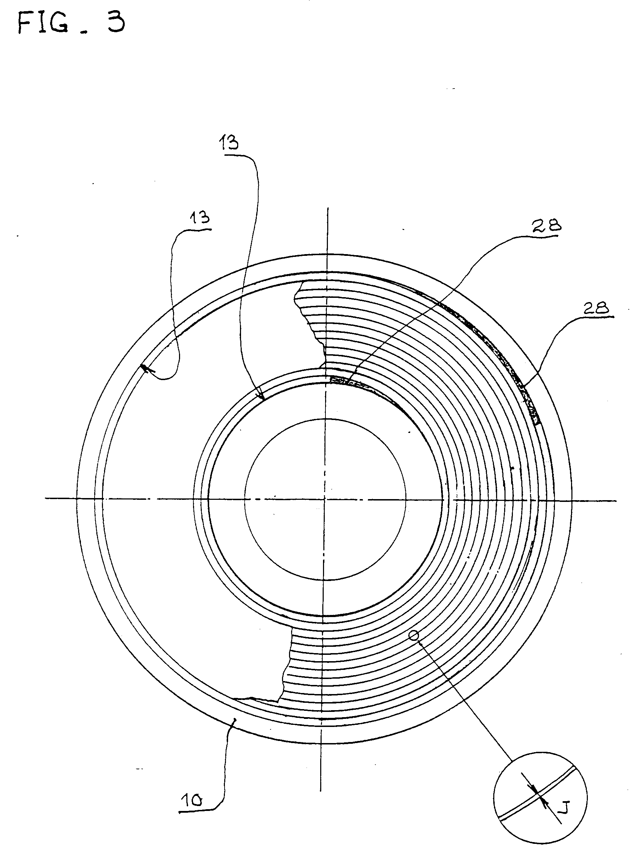

La figure 2 représente une étape de la fabrication, que l'on désignera par "obtention du brut". La coquille comporte un support 10, massif, dans lequel on été usinées respectivement une face plane 11, puis une face tronconique 12 et enfin deux faces cylindriques 13. Ces différentes faces définissent un logement à l'intérieur duquel se trouve enroulée en spirale une tôle en forme de bande désignée par la référence 20. Les faces latérales 22 et 23 de la bande 20 sont jointives aux faces latérales adjacentes. Au début et à la fin de l'enroulement, il faut utiliser une bande d'épaisseur variable 28 (voir figure 3), ou combler de toute autre manière le vide correspondant à la différence entre la spirale formée par la bande 20 et les faces cylindriques 13 usinées sur le support 10 (figure 2). A ce stade de la fabrication, la tranche 21 de la bande 20 du côté opposé au support 10 reproduit la forme du fond du logement usiné sur le support 10.

De façon générale, la forme du fond du logement est choisie pour être simple à usiner tout en s'approchant de la forme réelle finale du flanc du pneumatique qu'il faut mouler. Celle-ci est repérée grâce au trait 3 sur la figure 2. Toutes les spires formées par la bande 20 doivent chevaucher ce trait 3. De préférence, on immobilise les spires sur le support 10 en réalisant des perçages comme indiqué sur la figure 2 et en insérant une ou plusieurs goupilles 6. L'opération suivante consiste à usiner l'assemblage feuilleté ainsi réalisé à la forme exacte de la coquille moulante, selon le trait 3 à la figure 2, pour obtenir une coquille 1 comme celle de la figure 1. Cette opération d'usinage peut être tout à fait similaire à l'opération d'usinage dans la masse.

Même en assurant un enroulement de la bande 20 à spires jointives aussi serré que possible, il subsistera toujours entre spires un jeu J (voir grossissement à la figure 3) suffisant pour assurer une parfaite éventation en tous points de la coquille 1 d'un tel moule.

On sait qu'il convient que ce jeu soit plus faible que 0,05 mm, et de préférence inférieur à 0,03 mm, compte tenu de la nature des mélanges de caoutchoucs utilisés pour les flancs.

Suivant un mode de réalisation préféré de l'invention, l'élément lamelliforme a subi une opération de moletage, avant d'être assemblé pour constituer la surface moulante. Au moyen d'un galet cylindrique dont la surface comporte des nervures transversales acérées, on appuie sur ladite bande (ou plus généralement sur ledit élément lamelliforme), pour marquer au moins une face latérale de rainures transversales partant de ladite tranche jusqu'au bord desdites faces latérales opposé à ladite tranche, afin de former ainsi des chemins privilégié pour l'éventation. De préférence, on règle la pression exercée sur la surface de l'élément lamelliforme de façon à ce que les rainures aient une profondeur de l'ordre de 0.01 mm. Les chemins d'évacuation de l'air sont ainsi beaucoup moins sensibles à l'encrassement et l'éventation garde toute sont efficacité après un très grand nombre de cycles de vulcanisation.

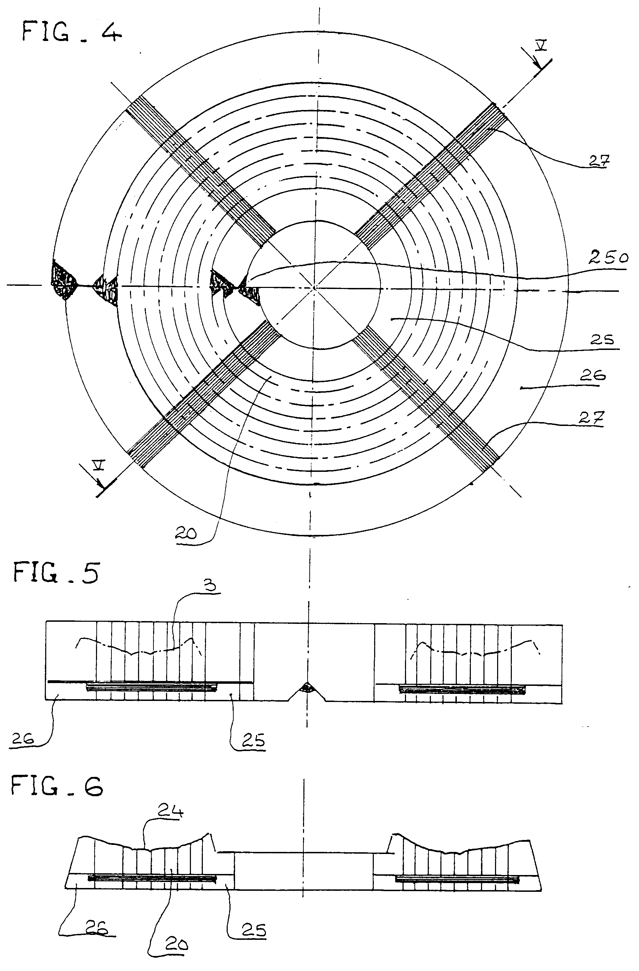

On peut bien entendu adopter différentes variantes constructives sans sortir du cadre de la présente invention. Ainsi, le logement du support 10 pourrait ne pas présenter de portion conique. Les éléments lamelliformes pourraient être des cerceaux de diamètres différents, dont les tranches forment un réseau de figures concentriques. On peut obtenir un enroulement en spirale d'une manière différente, comme expliqué ci-dessous à l'appui des figures 4 à 6 qui illustrent un assemblage réalisé sans support séparé. Puis un assemblage ainsi constitué pourrait aussi être logé dans un support tel que décrit aux figures 1 et 2.

Dans la seconde variante, on part d'un cerceau 25 (figure 4) dont les deux extrémités sont soudées entre elles en 250 de façon à laisser un décalage radial correspondant à l'épaisseur de la bande 20 que l'on va utiliser. Ensuite, sur ce support de bobinage constitué par le cerceau, on enroule une bande 20 à spires jointives comme dans la première variante. On termine l'enroulement en le coiffant d'un cerceau 26 dont les extrémités sont également soudées entre elles avec décalage radial.

Après cette première étape de bobinage, on peut (mais ce n'est pas obligatoire) déformer l'empilage de tôle pour obtenir une portion conique comme dans la précédente variante. L'ensemble ainsi constitué est stabilisé grâce à quelques cordons de soudure tel que 27 disposés radialement, sur le dos de l'enroulement (figure 5). On obtient alors le brut. L'étape suivante est l'usinage du brut. On fait disparaître le décalage radial sur les cerceaux 25 et 26 pour obtenir la forme voulue de la coquille, ou bien une forme permettant d'insérer l'assemblage dans un support tel que 10. Après usinage selon le trait 3 (figure 5), on obtient une coquille feuilletée dont l'essentiel de la surface moulante est définie par les tranches 24 des bandes 20 (figure 6). Dans toutes ces variantes de réalisation, les éléments lamelliformes sont disposés de telle sorte que leurs faces latérales soient orientées parallèlement à l'axe du moule.

Afin de ne pas surcharger les dessins avec des détails inutiles, on n'a pas représenté comment on assure l'évacuation de l'air hors du support 10. Notons que celui-ci doit comporter un ou quelques perçages pour mettre le fond du logement en communication avec l'extérieur. Pour favoriser le drainage de l'air, le support peut être pourvu de chemins d'évacuation de l'air aménagés sur sa face recevant lesdits éléments par leur tranche opposée à la tranche moulante : c'est par exemple un réseau de rainures aboutissant auxdits perçages.

L'assemblage d'éléments lamelliformes lui-même peut être réalisé quelque peu différemment. Il va sans dire que on peut utiliser un petit nombre de bandes 20 au lieu d'une seule. Ladite bande 20 peut être enroulée avec décalage axial contrôlé d'une spire à l'autre, pour définir, par incréments successifs, une surface moulante correspondant à la forme du flanc du pneu à mouler de façon directe, sans nécessiter une finition par usinage (compte non tenu bien entendu des marquages). Les éléments lamelliformes pourraient être disposés radialement et non pas en spirales ou en couronnes concentriques, éventuellement en plusieurs couches formant chacune une couronne. On peut favoriser le passage de l'air entre éléments lamelliformes adjacents en utilisant des éléments dont les faces en contact les unes sur les autres sont striées. On aura compris que le concept proposé par l'invention vise à obtenir une structure feuilletée pour aménager de petits interstices orientés perpendiculairement à la surface moulante.

## Revendications

1. Moule pour pneumatique, comportant deux coquilles (1) pour le moulage des flancs du pneumatique, et des moyens (4) de moulage de la bande de roulement du pneumatique, caractérisé en ce que au moins une coquille (1) comprend un assemblage feuilleté, constitué d'éléments lamelliformes (20) ayant des faces latérales et des tranches, lesdites faces latérales étant orientées sensiblement parallèlement à l'axe du moule et étant adjacentes, comportant des moyens pour maintenir lesdites faces latérales pressées les unes contre les autres tout en maintenant entre lesdits éléments lamelliformes un jeu (J) suffisant pour le passage de l'air, la surface moulante pour ledit flanc étant constituée par les tranches (24) juxtaposées desdits éléments lamelliformes (20).

2. Moule selon la revendication 1, caractérisé en ce que les tranches (24) de moulage forment un réseau de figures concentriques.

3. Moule selon la revendication 1, caractérisé en ce que ledit assemblage est formé par enroulement d'une bande à spires jointives formant une spirale.

4. Moule selon la revendication 3, caractérisé en ce que la bande est enroulée avec décalage axial contrôlé d'une spire à l'autre, pour définir une surface moulante correspondant à la forme du flanc de pneu à mouler.

5. Moule selon l'une des revendications 1 à 3 caractérisé en ce que la surface moulante est définie par opérations d'usinage pratiquées sur la tranche desdits éléments.

6. Moule selon l'une des revendications 1 à 5, caractérisé en ce que le jeu (J) subsistant entre éléments lamelliformes (20) adjacents est toujours inférieur ou égal à 0,03 mm.

7. Moule selon l'une des revendications 1 à 6, caractérisé en ce que l'assemblage d'éléments lamelliformes (20) est monté sur un support (10) pourvu de chemins d'évacuation de l'air aménagés sur sa face (11, 12) recevant lesdits éléments (20) par leur tranche opposée à la tranche moulante (24).

8. Moule selon l'une des revendications 1 à 7, caractérisé en ce que l'épaisseur desdits éléments lamelliformes est comprise entre 0.1 et 5 mm.

9. Moule selon l'une des revendications 1 à 8, caractérisé en ce que l'une au moins desdites faces latérales comporte des rainures transversales partant de ladite tranche jusqu'au bord desdites faces latérales opposé à ladite tranche, afin de former ainsi des chemins privilégié pour l'éventation.

10. Moule selon la revendication 9, caractérisé en ce que les rainures ont une profondeur de l'ordre de 0.01 mm.

11. Procédé de moulage d'un pneumatique, consistant à utiliser un moule selon l'une des revendications 1 à 10, dans lequel, au moment du moulage, l'évacuation de l'air est assuré, au moins en partie, par cheminement entre les éléments lamelliformes.

## Claims

1. A tyre mould, comprising two shells (1) for the moulding of the sidewalls of the tyre, and means (4) for moulding the tread of the tyre, characterised in that at least one shell (1) comprises a laminated assembly formed of lamelliform elements (20) having side faces and edges, side faces being oriented substantially parallel to the axis of the mould and being adjacent, and means for keeping said side faces pressed against each other while maintaining sufficient clearance (J) for the passage of air between said lamelliform elements, the moulding-surface for said sidewall being formed of juxtaposed edges (24) of said lamelliform elements (20).

2. A mould according to Claim 1, characterised in that the moulding edges (24) form a network of concentric figures.

3. A mould according to Claim 1, characterised in that said assembly is formed by winding a strip in contiguous turns forming a spiral.

4. A mould according to Claim 3, characterised in that the strip is wound with controlled axial offset from one turn to the next in order to define a moulding surface corresponding to the shape of the tyre sidewall to be moulded.

5. A mould according to one of Claims 1 to 3, characterised in that the moulding surface is defined by machining operations carried out on the edges of said elements.

6. A mould according to one of Claims 1 to 5, characterised in that the clearance (J) between adjacent lamelliform elements (20) is always less than or equal to 0.03 mm.

7. A mould according to one of Claims 1 to 6, characterized in that the assembly of lamelliform elements (20) is mounted on a support (10) provided with air evacuation paths arranged on the face (11, 12) thereof which receives said elements (20) by their edges opposite the moulding edges (24).

8. A mould according to one of Claims 1 to 7, characterized in that the thickness of said lamelliform elements is between 0.1 and 5 mm.

9. A mould according to one of Claims 1 to 8, characterized in that at least one of said side faces has transverse grooves extending from said edge to the edge of said side faces which is opposite said edge in order thus to form special paths for the venting.

10. A mould according to Claim 9, characterized in that the grooves have a depth of the order of 0.01 mm.

11. A process for the moulding of a tyre, consisting of using a mould according to one of Claims 1 to 10, in which, at the time of moulding, the evacuation of the air is ensured, at least in part, by channelling between the lamelliform elements.

## Patentansprüche

1. Form für einen Reifen, mit zwei Seitenplatten (1) zum Abformen der Flanken des Reifens, sowie Mitteln (4) zum Abformen der Lauffläche des Reifens, dadurch gekennzeichnet, daß mindestens eine Seitenplatte (1) eine laminierte Anordnung aufweist, die von lamellenförmigen Elementen (20) gebildet ist, die seitliche Flächen und Schnittflächen aufweisen, wobei die genannten seitlichen Flächen im wesentlichen parallel zur Achse der Form ausgerichtet sind und nebeneinanderliegen, mit Mitteln, um die genannten; seitlichen Flächen gegeneinandergedrückt zu halten, während man zwischen den genannten lamellenförmigen Flächen gleichzeitig ein Spiel (J) aufrechterhält, das für den Durchtritt von Luft ausreichend ist, wobei die abformende Oberfläche für die genannte Flanke von den nebeneinanderliegenden Schnittflächen (24) der genannten lamellenförmi` gen Elemente (20) gebildet ist.

2. Form nach Anspruch 1, dadurch gekennzeichnet, daß die Schnittflächen (24) zur Abformung ein Gitter aus konzentrischen Figuren bilden.

3. Form nach Anspruch 1, dadurch gekennzeichnet, daß die genannte Anordnung durch Aufwicklen eines Bandes mit nebeneinanderliegenden Windungen gebildet ist, das eine Spirale bildet.

4. Form nach Anspruch 3, dadurch gekennzeichnet, daß das Band mit axialer, gesteuerter Versetzung von einer Windung zur anderen versetzt ist; um eine Abformoberfläche zu bilden, die der Gestalt der Flanke des abzuformenden Reifens entspricht.

5. Form nach einem der Ansprüche 1 bis 3, dadurch gekennzeichnet, daß die abformende Oberfläche von Spanabhebungsvorgängen gebildet ist, die auf der Schnittfläche der genannten Elemente vorgenommen wurden.

6. Form nach einem der Ansprüche 1 bis 5, dadurch gekennzeichnet, daß das Spiel (J), das zwischen den lamellenförmigen, nebeneinanderliegenden Elementen (20) vorliegt, stets kleiner oder gleich ist 0,03 mm.

7. Form nach einem der Ansprüche 1 bis 6, dadurch gekennzeichnet, daß die Anordnung von lamellenförmigen Elementen (20) auf einem Träger (10) angebracht ist, der mit Luft-Absaugwegen versehen ist, die auf seiner Stirnfläche (11, 12) ausgebildet sind, die die genannten Elemente (20) mit ihrer Stirnfläche aufnimmt, die von der abformenden Stirnfläche (24) abgewandt ist.

8. Form nach einem der Ansprüche 1 bis 7, dadurch gekennzeichnet, daß die Dicke der genannten lamellenförmigen Elemente zwischen 0,1 und 5 mm liegt.

9. Form nach einem der Ansprüche 1 bis 8, dadurch gekennzeichnet, daß mindestens eine der genannten seitlichen Flächen querverlaufende Rillen aufweist, die von der genannten Schnittfläche bis zum Rand der genannten seitlichen Flachen ausgeht, der der genannten Schnittfläche entgegengesetzt ist, um auf diese Weise bevorzugte Entlüftungswege zu bilden.

10. Form nach Anspruch 9, dadurch gekennzeichnet, daß die Rillen eine Tiefe in der Größenordnung von 0,1 mm aufweisen.

11. Verfahren zum Abformen eines Reifens, das darin besteht, eine Form nach einem der Ansprüche 1 bis 10 zu benutzen, in welcher im Augenblick der Abformung die Entlüftung mindestens teilweise durch die Ableitung zwischen den lamellenförmigen Elementen sichergestellt ist.
